(19) **Europäisches Patentamt / European Patent Office / Office européen des brevets**

(11) **EP 3 437 406 B1**

(12) **FASCICULE DE BREVET EUROPEEN**

(45) Date de publication et mention de la délivrance du brevet:
**11.12.2019 Bulletin 2019/50**

(21) Numéro de dépôt: **17714191.8**

(22) Date de dépôt: **28.03.2017**

(51) Int Cl.:
*H04W 72/04* (2009.01)     *H04W 72/08* (2009.01)

(86) Numéro de dépôt international:
**PCT/EP2017/057297**

(87) Numéro de publication internationale:
**WO 2017/167740 (05.10.2017 Gazette 2017/40)**

(54) **PROCÉDÉ DE GESTION DE L'ALLOCATION DE FRÉQUENCES PORTEUSES**

VERFAHREN ZUR VERWALTUNG DER ZUWEISUNG VON TRÄGERFREQUENZEN

METHOD FOR MANAGING THE ALLOCATION OF CARRIER FREQUENCIES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.03.2016 FR 1652689**

(43) Date de publication de la demande:
**06.02.2019 Bulletin 2019/06**

(73) Titulaire: **Sagemcom Energy & Telecom SAS
92500 Rueil-Malmaison (FR)**

(72) Inventeurs:
- **SENNOUN, Yassir
  92500 Rueil Malmaison (FR)**
- **HARNAY, Franck
  92500 Rueil Malmaison (FR)**

(74) Mandataire: **Cabinet Le Guen Maillet
3, impasse de la Vigie
CS 71840
35418 Saint-Malo Cedex (FR)**

(56) Documents cités:
**WO-A1-2013/179095     US-A1- 2013 023 214
US-A1- 2015 133 057**

- **PHAM CONGDUC: "Towards quality of service for long-range IoT in unlicensed radio spectrum", 2016 WIRELESS DAYS (WD), IEEE, 23 mars 2016 (2016-03-23), pages 1-3, XP032896993, DOI: 10.1109/WD.2016.7461450 [extrait le 2016-04-27]**

EP 3 437 406 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne le domaine des réseaux de communication étendus destinés particulièrement à l'interconnexion d'objets communicants. La présente invention concerne plus spécifiquement un procédé de gestion de l'allocation par un serveur de fréquences porteuses destinées à être utilisées pour l'émission de messages par des dispositifs électroniques connectés à un réseau de communication étendu.

Différents protocoles définissent des réseaux de communication étendus destinés notamment à l'interconnexion d'objets communicants. Un de ces protocoles est défini par la « *LoRa™ alliance* » (*Long Range alliance* en anglais) et porte le nom de « *LoRaWAN™* » (*LoRA Wide Area Network* en anglais). Ce protocole est par exemple décrit dans le document « LoRaWAN™ Specification v1.0 » publié en janvier 2015. Dans ce protocole, l'allocation des fréquences porteuses qu'un dispositif électronique, tel un objet connecté, utilise pour envoyer des messages peut être définie par un opérateur du réseau de communication étendu. L'opération d'allocation des fréquences porteuses est typiquement réalisée par un serveur compris dans le réseau de communication étendu, le serveur allouant à chaque dispositif électronique une liste de fréquences porteuses. Un tel serveur est dit serveur de contrôle. Le dispositif électronique peut alors choisir parmi les fréquences porteuses de cette liste une fréquence porteuse pour envoyer un message. Afin d'éviter qu'un dispositif électronique n'accapare alors la bande passante disponible à son seul profit, un mécanisme de protection a été défini. Ainsi, les fréquences porteuses étant regroupées en différentes sous-bandes, pour chaque dispositif électronique, un paramètre dit « *DutyCycle* » est possiblement associé à chacune des sous-bandes. Un dispositif électronique pour lequel un « *DutyCycle* » a été fixé pour une sous-bande donnée doit alors respecter ce critère pour les émissions de messages utilisant une fréquence porteuse comprise dans ladite sous-bande. Ainsi, pour une sous-bande donnée, et pour un dispositif électronique, ce dispositif électronique doit respecter un rapport cycle en transmission, ou émission de message, maximal. Dit autrement, après chaque émission d'un message sur une fréquence porteuse comprise dans une sous-bande « i », le dispositif électronique ne peut alors plus utiliser aucune fréquence porteuse comprise dans cette sous-bande « i » pour l'émission d'un nouveau message pendant une durée $T_{off(i)}$, avec :

$$T_{off}(i) = (\ TimeOnAir\ /\ DutyCycle(i)\ ) - TimeOnAir,$$

$T_{off}(i)$ correspondant à la durée pendant laquelle le dispositif électronique ne peut plus utiliser aucune des fréquences porteuses comprises dans la sous-bande « *i* » après l'émission d'un message sur l'une des fréquences porteuses comprise dans la sous-bande « *i* »,

*TimeOnAir* correspond à une durée d'émission du message sur la fréquence porteuse ou autrement dit, la durée d'occupation de la fréquence porteuse pour l'émission du message,

*DutyCycle(i)* correspond à une valeur du *DutyCycle* pour la sous-bande « *i* », le *DutyCycle* étant exprimé en pourcentage.

On note que la durée *TimeOnAir* correspond *in fine* au pourcentage *DutyCycle(i)* de *Toff(i)*.

Ainsi, un dispositif électronique venant d'émettre un message pendant une durée de 0.2 secondes (*TimeOnAir* = 0.2 secondes) sur une fréquence porteuse d'une sous-bande « *i* » associée à un *DutyCycle* de « 1% » (*DutyCycle(i)* = 0.01) ne peut plus émettre sur l'une quelconque des fréquences porteuses de cette même sous-bande « *i* » pendant 19.8 secondes ($T_{off}(i)$ = 19.8 secondes).

Pour un dispositif électronique, chaque sous-bande de fréquence dispose, ou non, d'une valeur de *DutyCycle* associée différente. Le paramètre *DutyCycle* est donc un paramètre permettant d'éviter qu'un dispositif électronique n'émette des messages trop fréquemment, ce qui permet d'éviter une congestion du réseau de communication étendu. Ainsi, un dispositif électronique venant d'émettre un message doit respecter un temps de silence, ce qui permet aux autres dispositifs électroniques utilisant des fréquences porteuses de la même sous-bande d'émettre eux aussi des messages sans risquer une interférence ou collision des messages émis.

Un serveur de contrôle d'un réseau de communication étendu, utilisé pour allouer des fréquences porteuses à des dispositifs électroniques connectés audit réseau, peut aussi allouer des valeurs de *DutyCycle* à respecter pour chaque sous-bande correspondant aux fréquences porteuses allouées.

Toutefois, imposer une valeur de *DutyCycle* à respecter pour l'émission de messages à un dispositif électronique peut empêcher ce dernier de respecter d'éventuelles contraintes applicatives. En effet, le délai à respecter entre l'émission de deux messages peut alors devenir trop grand pour respecter le besoin d'un applicatif d'un dispositif électronique qui aurait besoin d'émettre des messages plus rapidement.

Il est aussi à noter que la norme « *LoRaWAN™ Specification v1.0* » prévoit une commande « *DutyCycleReq* » permettant de fixer une valeur *DutyCycle* maximale pour toutes les sous-bandes utilisées par un dispositif électronique. Ainsi, la valeur maximale du *DutyCycle* pour chaque sous-bande sera limitée, le dispositif électronique ne sera pas en mesure d'utiliser toutes les fréquences porteuses des différentes sous-bandes, potentiellement associées à une valeur de *DutyCycle* plus grande, à leur plein potentiel.

Enfin, la commande permettant d'allouer une valeur de *DutyCycle* à une sous-bande pour un dispositif électronique peut ne pas être prise en compte par ce dispositif électronique. Les raisons pour cela peuvent être multiples, que le dispositif électronique comprenne un *bug* applicatif ou que le dispositif électronique refuse sciemment la commande, afin par exemple de respecter une contrainte applicative. Il est à noter que le document US 2013/023214 A1 (WANG DONG [US] ET AL) 24 janvier 2013 (2013-01-24) propose une solution pour l'allocation des fréquences dans un système MBAN (Médical Body Area Network); deux listes de fréquences sont construites: une première liste ordonnée, à utiliser pour les transmissions des systèmes MBAN, qui inclut les fréquences de CQI de valeurs hautes et de valeurs acceptables et une deuxième liste, qui contient des fréquences non-disponibles à l'utilisation des systèmes MBAN, de mauvaise qualité CQI. Ces listes sont utilisées dans le but d'éviter de procéder à un CCA, lors de l'estimation du CQI pour la réallocation dynamique des resources,des fréquences non-disponibles à l'utilisation des systèmes MBAN et en même temps de trouver une fréquence appropriée pour les transmissions d'un système MBAN.

Pour toutes ces raisons, il est souhaitable de pallier ces inconvénients de l'état de la technique.

L'invention concerne un procédé de gestion de l'allocation, par un serveur d'un réseau de communication étendu, d'une première liste de fréquences porteuses pouvant être utilisées par un dispositif électronique connecté audit réseau pour l'émission de message, le serveur recevant lesdits messages, le procédé étant exécuté par le serveur. Le procédé comprend les étapes de déterminer une deuxième liste de fréquences porteuses, cette liste correspondant à une liste de fréquences porteuses dites verbales, recevoir un premier message en provenance du dispositif électronique, le premier message ayant été émis sur une première fréquence porteuse qui n'est pas comprise dans la deuxième liste, déterminer la valeur d'un paramètre de qualité associé au premier message reçu, et, quand la valeur du paramètre de qualité dépasse la valeur d'un premier seuil : déterminer une première sous-liste de la deuxième liste, comprenant au moins une deuxième fréquence porteuse, la deuxième fréquence porteuse n'étant pas comprise dans la première liste, déterminer une deuxième sous-liste de la première liste, comprenant au moins une troisième fréquence, la troisième fréquence porteuse n'étant pas comprise dans la deuxième liste, la première sous-liste et la deuxième sous-liste comprenant un même nombre de fréquences porteuses et envoyer au dispositif électronique un deuxième message comprenant au moins une commande, la commande permettant de remplacer les fréquences porteuses de la deuxième sous-liste par les fréquences porteuses de la première sous-liste.

Avantageusement, le procédé permet de définir parmi toutes les fréquences porteuses utilisables par le réseau de communication étendu, une deuxième liste de fréquences porteuses, dites fréquences porteuses « verbales » ou « poubelles », pour lesquelles le respect d'un paramètre de qualité n'est pas imposé. Le serveur, dit de contrôle, lorsqu'il détecte qu'un dispositif électronique ne respecte pas un paramètre de qualité lorsqu'il émet des messages sur une fréquence porteuse n'appartenant pas à la deuxième liste des fréquences porteuses « verbales », peut alors basculer les fréquences porteuses utilisées par le dispositif électronique, sans respecter un paramètre de qualité, vers des fréquences porteuses « verbales ». Ainsi, les fréquences porteuses non « verbales » sont préservées, les dispositifs électroniques ne respectant pas un paramètre de qualité, par exemple un *DutyCycle,* se voyant allouer des fréquences porteuses « verbales » à la place des fréquences porteuses non « verbales ». Le procédé permet de s'assurer un respect des paramètres de qualité sur les fréquences porteuses non « verbales », en remplaçant dans la première liste de fréquences porteuses utilisable par un dispositif électronique non respectueux d'un paramètre de qualité des fréquences non « verbales » par des fréquences « verbales ».

Selon un mode de réalisation complémentaire de l'invention, déterminer la valeur d'un paramètre de qualité associé au premier message reçu comprend les étapes de : déterminer une durée écoulée entre la réception du premier message et la réception d'un précédent message, et, quand la durée écoulée est supérieure à une durée prédéterminée, incrémenter un premier compteur représentant le nombre de dépassement du deuxième seuil, le paramètre de qualité correspondant à un ratio entre la valeur du premier compteur et un deuxième compteur correspondant à un nombre de message reçu par le serveur en provenance du dispositif électronique via une fréquence porteuse non comprise dans la deuxième liste.

Avantageusement, le paramètre de qualité peut correspondre à un temps écoulé entre la réception de deux messages, la durée prédéterminée correspondant par exemple à une durée minimale à respecter. Un ratio est déterminé entre le nombre de messages ne respectant pas la durée minimale et le nombre total de messages reçus par le serveur en provenance du dispositif électronique via une fréquence porteuse non « verbale ». Une action corrective n'est prise que si le ratio est supérieur à un seuil. Ainsi, une certaine tolérance est permise à d'éventuels non respects ponctuels du paramètre de qualité.

Selon un mode de réalisation complémentaire de l'invention, la durée prédéterminée est déterminée en fonction d'une durée d'émission du précédent message et d'une valeur prédéterminée associée à la première fréquence porteuse.

Avantageusement, la valeur prédéterminée correspond à une valeur d'un $T_{off}(i)$ d'un *DutyCycle.*

Selon un mode de réalisation complémentaire de l'invention, l'étape de déterminer la valeur du paramètre de qualité n'est réalisée que si le premier compteur ou le deuxième compteur est supérieur à un deuxième seuil.

Avantageusement, le procédé permet une certaine tolérance à d'éventuels non-respects du paramètre de qualité par le dispositif électronique en ne déclenchant une action de mise à jour de la première liste qu'après détection d'un nombre prédéterminé de dépassements de la durée prédéterminée.

Selon un mode réalisation complémentaire de l'invention, le réseau de communication étendu est de type *LoRaWan*, la première fréquence porteuse est comprise dans une sous-bande, la durée prédéterminée est déterminée en fonction d'une valeur d'un paramètre *DutyCycle* associé à la sous-bande, le deuxième compteur correspond à un nombre de messages reçus par le serveur en provenance du dispositif électronique via une fréquence porteuse non comprise dans la deuxième liste et comprise dans une même sous-bande que la première fréquence porteuse, et la troisième fréquence est de plus comprise dans la sous-bande.

Avantageusement, le procédé s'applique dans un contexte de réseau de communication étendu de type *Lo-RaWAN*. Le paramètre de qualité associé au premier message reçu correspond alors au paramètre *Toff(i)*.

Selon un mode de réalisation complémentaire de l'invention, la deuxième fréquence porteuse est choisie égale à une valeur prédéterminée lorsque toutes les fréquences porteuses de la deuxième liste sont comprises dans la première liste.

Avantageusement, un choix d'une valeur prédéterminée permet de pallier le manque de fréquence porteuse disponible.

L'invention concerne aussi un serveur d'un réseau de communication étendu, le serveur comprenant un premier processeur, le premier processeur étant adapté pour allouer une première liste de fréquences porteuses pouvant être utilisées par un dispositif électronique connecté audit réseau pour l'émission de messages, déterminer une deuxième liste de fréquences porteuses, cette liste correspondant à une liste de fréquences porteuses dites verbales, recevoir un premier message en provenance du dispositif électronique, le premier message ayant été émis sur une première fréquence porteuse qui n'est pas comprise dans la deuxième liste, déterminer la valeur d'un paramètre de qualité associé au premier message reçu, et, quand la valeur du paramètre de qualité dépasse la valeur d'un premier seuil : déterminer une première sous-liste de la deuxième liste, comprenant au moins une deuxième fréquence porteuse, la deuxième fréquence porteuse n'étant pas comprise dans la première liste, déterminer une deuxième sous-liste de la première liste, comprenant au moins une troisième fréquence, la troisième fréquence n'étant pas comprise dans la deuxième liste, la première sous-liste et la deuxième sous-liste comprenant un même nombre de fréquences porteuses, envoyer au dispositif électronique un deuxième message comprenant au moins une commande, la commande permettant de remplacer les fréquences porteuses de la deuxième sous-liste par les fréquences porteuses de la première sous-liste.

L'invention concerne aussi un système comprenant au moins un dispositif électronique et un serveur connectés par un réseau de communication étendu, le serveur comprenant un premier processeur, le premier processeur étant adapté pour allouer une première liste de fréquences porteuses pouvant être utilisées par un dispositif électronique connecté audit réseau pour l'émission de messages, déterminer une deuxième liste de fréquences porteuses, cette liste correspondant à une liste de fréquences porteuses dites verbales, recevoir un premier message en provenance du dispositif électronique, le premier message ayant été émis sur une première fréquence porteuse qui n'est pas comprise dans la deuxième liste, déterminer la valeur d'un paramètre de qualité associé au premier message reçu, et, quand la valeur du paramètre de qualité dépasse la valeur d'un premier seuil : déterminer une première sous-liste de la deuxième liste, comprenant au moins une deuxième fréquence porteuse, la deuxième fréquence porteuse n'étant pas comprise dans la première liste, déterminer une deuxième sous-liste de la première liste, comprenant au moins une troisième fréquence, la troisième fréquence n'étant pas comprise dans la deuxième liste, la première sous-liste et la deuxième sous-liste comprenant un même nombre de fréquences porteuses et envoyer au dispositif électronique un deuxième message comprenant au moins une commande, la commande permettant de remplacer les fréquences porteuses de la deuxième sous-liste par les fréquences porteuses de la première sous-liste, le dispositif électronique comprenant un deuxième processeur, le deuxième processeur étant adapté pour recevoir la première liste de fréquences porteuses pouvant être utilisées pour l'émission de messages sur le réseau de communication étendu, émettre des messages sur l'une des fréquences porteuses de la première liste, recevoir le deuxième message, et mettre à jour la première liste en fonction d'au moins la commande reçue.

La présente invention concerne également un programme d'ordinateur, comprenant des instructions pour mettre en œuvre, par un processeur, le procédé de gestion de l'allocation de fréquences porteuses selon l'invention, lorsque ledit programme d'ordinateur est exécuté par ledit processeur.

La présente invention concerne également des moyens de stockage stockant ledit programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

- la **Fig. 1** illustre schématiquement l'architecture d'un réseau de communication étendu utilisé notamment pour connecter des objets communicants ;
- la **Fig. 2** illustre schématiquement l'architecture d'un serveur adapté à la mise en œuvre du procédé selon un mode de réalisation de l'invention ;

- la **Fig. 3** illustre schématiquement un procédé de gestion de l'allocation, par un serveur d'un réseau de communication étendu, d'une liste de fréquences porteuses pouvant être utilisées par un dispositif électronique connecté audit réseau pour l'émission de messages selon un mode de réalisation de l'invention.

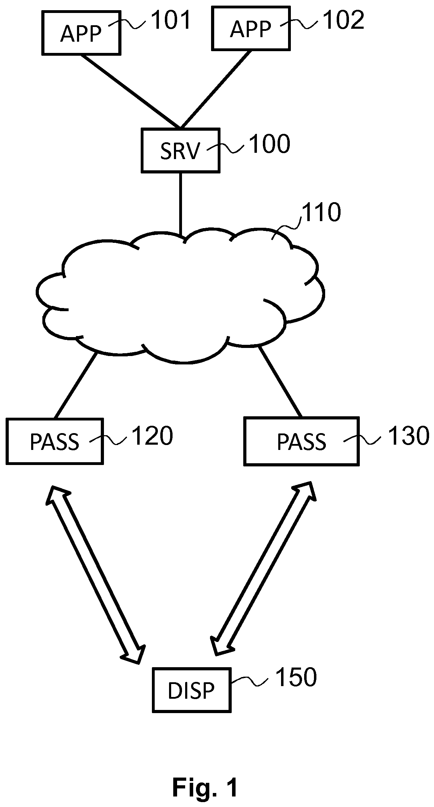

La **Fig. 1** illustre schématiquement l'architecture d'un réseau de communication étendu utilisé notamment pour connecter des objets communicants. Un objet communicant, ou dispositif électronique, DISP 150 peut se connecter au réseau de communication étendu via au moins une passerelle PASS 120 ou 130 (« *gateway* » en anglais). Les passerelles PASS 120 et 130 sont connectées via un réseau de communication, par exemple de type Internet, à un serveur SRV 100, dit serveur de contrôle. Suivant les technologies mises en place, le serveur de contrôle est appelé serveur LNS (pour « *L2TP Network Server* » en anglais) car un tunnel peut être mis en place entre le dispositif électronique 150 et le serveur SRV 100, le tunnel utilisant un protocole de *tunnellisation* (« *tunneling* » en anglais) de niveau 2 (« *Layer 2 Tunneling Protocol* » - L2TP - en anglais). Différents serveurs applicatifs APP 101 ou 102 peuvent être connectés au serveur SRV 100.

Le dispositif électronique DISP 150 communique avec une passerelle PASS 120 ou 130 via une technologie radiofréquence. Comme vu précédemment, l'allocation des bandes de fréquences porteuses utilisables par le dispositif électronique DISP 150 peut être mise en œuvre par le serveur SRV 100. Les fréquences porteuses allouées à un dispositif électronique DISP 150 pour communiquer, c'est-à-dire envoyer des messages vers une passerelle, sont choisies parmi une liste de fréquences porteuses disponibles attribuées pour l'opération du réseau de communication étendu. L'allocation des fréquences porteuses relève d'une stratégie choisie par un opérateur du réseau de communication étendu.

Selon la présente invention, l'opérateur d'un réseau de communication étendu distingue parmi les fréquences porteuses disponibles entre des fréquences porteuses dites « verbales » et des fréquences porteuses dites « non verbales ». L'intérêt d'un tel choix est de pouvoir ensuite attribuer préférentiellement les fréquences porteuses « verbales » à des dispositifs électroniques qui ne respectent pas certains critères de qualité pour l'émission de leurs messages, et de préserver ainsi les fréquences porteuses non verbales. Cette gestion de l'allocation des fréquences porteuses est dynamique, permettant de détecter et réagir lorsqu'un dispositif électronique ne respecte plus les critères de qualité d'émission pour ses messages. A noter que le choix, ainsi que le nombre, des fréquences porteuses dites « verbales » relève d'une stratégie de l'opérateur du réseau de communication étendu.

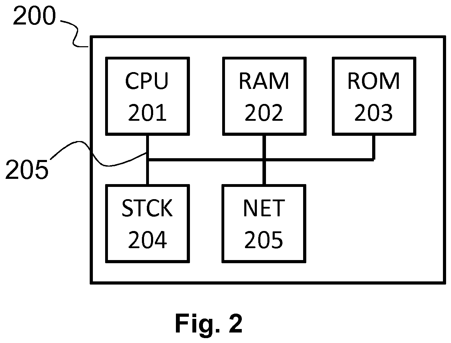

La **Fig. 2** illustre schématiquement l'architecture d'un serveur adapté à la mise en œuvre du procédé selon un mode de réalisation de l'invention. Le serveur 200 est le serveur 100 de la Fig. 1. Le serveur 200 comprend, reliés par un bus de communication 205 : un processeur ou CPU (*Central Processing Unit*) 201 ; une mémoire vive RAM (*Random Access Memory*) 202 ; une mémoire morte ROM (*Read Only Memory*) 203 ; une unité de stockage ou un lecteur de support de stockage, tel qu'un lecteur de cartes SD (Secure Digital) ou un disque dur HDD (*Hard Disk Drive*) 204 et au moins une interface réseau NET 205 permettant au serveur 200 d'accéder à un réseau de communication.

Le processeur 201 est capable d'exécuter des instructions chargées dans la RAM 202 à partir de la ROM 203, de l'unité de stockage STCK 204 ou d'un réseau de communication via l'interface réseau NET 205. Lorsque le serveur 200 est mis sous tension, le processeur 201 est capable de lire dans la RAM 202 des instructions et de les exécuter. Ces instructions forment un programme d'ordinateur permettant la mise en œuvre ou l'exécution, par le processeur 201, de tout ou partie des procédés et étapes décrits dans le présent document.

Ainsi, tout ou partie des procédés et étapes décrits dans le présent document peut être implémenté sous forme logicielle par exécution d'un ensemble d'instructions par une machine programmable, tel qu'un DSP (Digital Signal Processor) ou un microcontrôleur. Tout ou partie des modules, procédés et étapes décrits ci-après peut aussi être implémenté sous forme matérielle par une machine ou un composant dédié, tel qu'un FPGA (*Field-Programmable Gate Array* en anglais) ou un ASIC (*Application-Specific Integrated Circuit* en anglais).

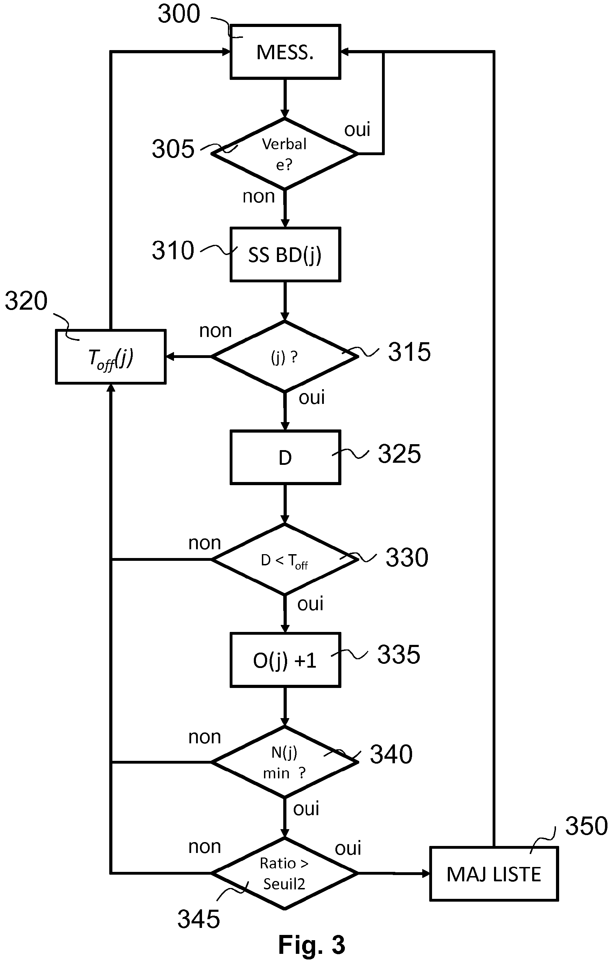

La **Fig. 3** illustre schématiquement un procédé de gestion de l'allocation, par un serveur d'un réseau de communication étendu, d'une liste de fréquences porteuses pouvant être utilisées par un dispositif électronique connecté audit réseau pour l'émission de messages selon un mode de réalisation de l'invention. Ledit serveur est similaire au serveur 200 illustré en Fig. 2, c'est à dire au serveur SRV 100 illustré en Fig. 1. Le réseau de communication étendu et le dispositif électronique sont ceux illustrés dans la Fig. 1, le dispositif électronique étant l'objet communicant DISP 150.

Le procédé décrit ci-après est exécuté après une première étape d'allocation, selon un procédé connu, de fréquences porteuses au dispositif électronique DISP 150. L'allocation des fréquences porteuses conduit à l'allocation d'une première liste de fréquences porteuses pour le dispositif électronique DISP 150. Ledit dispositif électronique peut donc choisir une des fréquences porteuses de la première liste pour émettre un message. Le serveur SRV 100 gère notamment l'allocation de la première liste de fréquences porteuses au dispositif électronique DISP 150.

Une deuxième liste de fréquences porteuses est définie par, par exemple, un opérateur du réseau de communication étendu. La deuxième liste correspond aux fréquences porteuses dites « verbales ». Par conséquent, les fréquences porteuses disponibles pour être utilisées par le réseau de communication étendu, mais non comprises dans cette deuxième liste sont dites « non verbales ». L'objectif du procédé est de faire en sorte que des dispositifs électroniques qui ne respectent pas des critères de qualités émettent préférentiellement leurs messages sur des fréquences porteuses dites « verbales », ceci afin de préserver une qualité de service pour les fréquences porteuses dites « non verbales ».

La première liste et la deuxième liste sont enregistrées dans une mémoire accessible par le serveur SRV 100, typiquement dans l'unité de stockage STCK 204 du serveur SRV 100.

Dans une étape 300, une fois les fréquences porteuses allouées au dispositif électronique DISP 150, le serveur SRV 100 est en attente de la réception d'un message en provenance du dispositif électronique DISP 150.

Dans une étape ultérieure 305, si un message est reçu, alors, le serveur SRV 100 détermine si ledit message a été émis par le dispositif électronique DISP 150 via une première fréquence porteuse comprise dans la deuxième liste des fréquences porteuses dites « verbales ».

En effet, lorsque le dispositif électronique DISP 150 émet un message, celui-ci peut être reçu par une ou plusieurs passerelles PASS 120 ou 130. Une ou plusieurs passerelles PASS 120 ou 130 transmettent ensuite le message reçu vers le serveur SRV 100, le message étant alors accompagné d'informations comme la fréquence porteuse sur laquelle le message a été reçu, un marquage temporel correspondant au moment de la réception du message (« *timestamp* » en anglais), ou tout autre paramètre lié à la réception du message par la passerelle PASS transmettant le message. Le serveur SRV 100 reçoit donc le message émis par le dispositif électronique DISP 150, possiblement en plusieurs exemplaires car retransmis par différentes passerelles PASS, accompagné d'une information sur la première fréquence porteuse utilisée par le dispositif électronique DISP 150 pour l'émission du message.

Si le dispositif électronique DISP 150 a émis le message sur une première fréquence porteuse comprise dans la deuxième liste, c'est à dire une fréquence porteuse dite «verbale », alors le serveur SRV 100 arrête ici le traitement pour ce message et retourne à l'étape 301 attendre un prochain message.

Si le dispositif électronique DISP 150 a émis le message sur une première fréquence porteuse non comprise dans la deuxième liste, c'est à dire une fréquence porteuse dite « non verbale », alors le serveur SRV 100 passe à une étape 310.

Dit autrement, si le serveur SRV 100 reçoit un message en provenance du dispositif électronique DISP 150, le message ayant été émis sur une première fréquence porteuse qui n'est pas comprise dans la deuxième liste des fréquences porteuses dites « verbales », alors le serveur SRV 100 passe à l'étape 310.

Dans l'étape ultérieure 310, le serveur SRV 100 détermine une sous-bande « j » à laquelle appartient la première fréquence porteuse utilisée par le dispositif électronique pour l'émission du message. L'information concernant une sous-bande dans laquelle est comprise une fréquence porteuse est définie par l'opérateur du réseau de communication étendu, possiblement selon un standard, et enregistrée dans une mémoire accessible par le serveur SRV 100, possiblement l'unité de stockage STCK 204.

Lors de cette étape 310, un compteur «N(j) » associé à la sous-bande « j » est incrémenté. Ce compteur « N(j) » permet de compter le nombre de messages reçus par le serveur SRV 100, messages émis par le dispositif électronique DISP 150 via une fréquence porteuse dite « non verbale » de la sous-bande « j ».

Le serveur SRV 100 détermine aussi au moins un paramètre de qualité à respecter associé avec la sous-bande « j ». Le paramètre de qualité peut correspondre à n'importe quelle contrainte définie et que le dispositif électronique DISP 150 doit respecter lorsqu'il émet un message sur une fréquence porteuse quelconque de la sous-bande « j ». Possiblement, le paramètre de qualité correspond à un *DutyCycle*, c'est-à-dire une durée minimale qui doit s'écouler entre les émissions de deux messages consécutifs sur une fréquence porteuse quelconque de la sous-bande « j » comme expliqué précédemment. Par exemple, le serveur peut déterminer que le *DutyCycle(j)* à respecter pour la sous-bande « j » déterminée est de « un » pourcent (« 1 % »).

Dans une étape ultérieure 315, le serveur SRV 100 détermine s'il a reçu, dans une étape précédente, un précédent message émis sur une des fréquences porteuses de la sous-bande « j ».

Si le serveur n'a pas précédemment reçu de message, alors il n'est pas possible de déterminer la valeur du paramètre de qualité correspondant au *DutyCycle*(j) à respecter car celui-ci est défini en particulier par le temps d'émission du précédent message, comme vu précédemment. Dans ce cas, le serveur SRV 100 passe à l'étape 320.

Toutefois, selon un mode de réalisation alternatif de l'invention, si aucun message émis sur une des fréquences porteuses de la sous-bande « j » n'a été précédemment reçu, alors le serveur SRV 100 détermine une valeur fictive de la durée $T_{off}(j)$ à respecter correspondant à *DutyCycle(j),* en la choisissant par exemple égale à la durée maximale mesurable par le serveur SRV 100 (cette valeur dépend alors de la méthode de codage d'une durée par le serveur SRV 100). Dans ce cas alternatif, le serveur SRV 100 passe ensuite à l'étape 325.

Dans une étape 320, le serveur SRV 100 détermine la durée d'émission du message reçu (« *TimeOnAir »*). Cette durée peut être déterminée à partir de la longueur du message reçu. Cette durée peut être transmise par une passerelle PAS S 120 ou 130 ayant transmis le message vers le serveur SRV 100, la durée d'émission étant une information déterminée par la passerelle. Cette durée d'émission peut aussi être déterminée à partir d'une information comprise dans le message lui-même, le dispositif électronique DISP 150 pouvant possiblement encoder la durée d'émission du message dans le message lui-même.

Avec la durée d'émission ainsi déterminée, et avec la valeur du *DutyCycle(j),* le serveur SRV 100 détermine la valeur $T_{off}(j)$ correspondant à la durée que doit normalement attendre le dispositif électronique DISP 150 avant d'émettre un autre message via l'une des fréquences porteuses de la sous-bande « j ». Dit autrement, le serveur SRV 100 détermine la valeur du paramètre de qualité à respecter pour le prochain message reçu via l'une des fréquences porteuses de la sous-bande « j » ; le prochain message ne devant normalement pas être émis avant que la durée $T_{off}(j)$ ne soit écoulée. La durée $T_{off}(j)$ est typiquement décomptée à partir du moment de la réception du message précédent (« *timestamp* » associé au précédent message).

Ainsi, pour un message reçu, lors de l'étape 320, le serveur SRV 100 détermine :

- le moment de réception de ce message reçu (« *timestamp* »),
- la durée qui doit s'écouler avant l'émission d'un prochain message, en fonction du *DutyCycle(j)* et du temps d'émission de ce message reçu *(« TimeOnAir »)*

Ces paramètres sont enregistrés dans une mémoire du serveur SRV 100 en association avec la sous-bande « j », par exemple dans l'unité de stockage STCK 204.

Dans le cas où un message a été précédemment émis par le dispositif électronique DISP 150 via l'une des fréquences porteuses de la sous-bande « j », alors des valeurs des précédents paramètres sont enregistrées dans une mémoire du serveur SRV 100 en association avec la sous-bande « j ». Le serveur SRV 100 passe alors à une étape 325.

Dans l'étape 325, le serveur SRV 100 détermine la durée « D » écoulée entre la réception du message reçu et la réception du précédent message émis via l'une des fréquences porteuses de la sous-bande « j ». Pour déterminer cette valeur de « D », le serveur SRV 100 fait la différence entre le marquage temporel (« *timestamp* ») associé à la réception du message reçu et le marquage temporel d'un précédent message enregistré en association avec la sous-bande « j » dans une mémoire du serveur SRV 100, par exemple l'unité de stockage STCK 204. Ce dernier marquage temporel a été enregistré lors d'une précédente étape 320.

Dans une étape ultérieure 330, le serveur SRV 100 détermine si la durée écoulée « D » déterminée lors de la précédente étape 325 est supérieure ou non à un premier seuil. Ce premier seuil est typiquement choisi comme étant la valeur $T_{off}(j)$. Afin de tenir compte d'une possible imprécision ou déphasage des horloges des équipements (serveur SRV 100, passerelle PASS et dispositif électronique DISP 150) et d'offrir une certaine tolérance, la valeur du premier seuil peut être choisie comme étant égale à la valeur de $T_{off}$ réduite d'une certaine marge (par exemple quelques millisecondes de moins que $T_{off}(j)$) ou comme égale à un pourcentage de la valeur de $T_{off}(j)$ (par exemple 90% de $T_{off}(j)$).

Si la durée écoulée « D » est supérieure au premier seuil, alors le *DutyCycle(j)* est considéré respecté et le serveur SRV 100 passe à l'étape 320 afin de mettre à jour les valeurs de $T_{off}(j)$ et le marquage temporel du message reçu pour un prochain message.

Si la durée écoulée « D » est inférieure au premier seuil, alors le *DutyCycle(j)* n'est pas respecté pour ce message reçu. Le message reçu n'aurait normalement pas dû être émis par le dispositif électronique DISP 100 si tôt après l'émission du précédent message, une durée supérieure au premier seuil (qui est de l'ordre de grandeur de $T_{off}(j)$) aurait normalement dû s'écouler. Le serveur SRV 100 passe alors à une étape 335.

Dans l'étape 335, le serveur SRV 100 incrémente un compteur « O(j) » associé à la sous-bande « j ». Ce compteur « O(j) » correspond au nombre de messages pour lesquels la durée écoulée « D » associée a dépassé le premier seuil. Dit autrement, ce compteur « O(j) » représente le nombre de messages n'ayant pas respecté un paramètre de qualité (par exemple un cycle d'envoi *DutyCycle(j)*) pour la sous-bande « j ».

Dans une étape ultérieure 340, le serveur SRV 100 détermine combien de messages ont été reçus en provenance du dispositif électronique DISP 150 via l'une des fréquences porteuses dites « non verbales » de la sous-bande « j ». Dit autrement, le serveur SRV 100 retrouve la valeur du compteur « N(j) » incrémenté lors de l'étape 310. Si le serveur considère que ce nombre « N(j) » n'est pas suffisamment élevé pour être représentatif (c'est-à-dire, si le nombre de messages est inférieur à un deuxième seuil), le serveur SRV 100 passe à l'étape 320.

Alternativement, lors de l'étape 340, le serveur SRV 100 considère la valeur du compteur « O(j) » déterminée lors de l'étape 335 plutôt que le nombre de messages « N(j) » reçus en provenance du dispositif électronique DISP 150 via l'une des fréquences porteuses «dites «non verbales » de la sous-bande « j ». Selon un autre mode de réalisation, les deux valeurs sont chacune comparées à un seuil différent.

L'intérêt de l'étape 340 est de faire en sorte que le serveur SRV 100 ne réalise des actions correctrices vis-à-vis d'un dispositif électronique (voir étape ultérieure 350) que si un nombre significatif de messages ont été reçus et/ou reçus et identifiés comme ne respectant pas un paramètre de qualité. L'étape 340 permet particulièrement de s'assurer que le ratio déterminé lors de l'étape ultérieur 345 est significatif car portant sur des valeurs suffisamment grandes.

Dans l'étape ultérieure 345, le serveur SRV 100 détermine un ratio entre le compteur « O(j) » déterminé lors de l'étape 335 et le nombre de messages reçus en provenance du dispositif électronique DISP 150 via l'une des fréquences porteuses dites « non verbales » de la sous-bande « j » (compteur « N(j) »). Ce ratio est donc un paramètre de qualité associé au message reçu, ce paramètre de qualité étant possiblement déterminé pour chaque message reçu. Dit autrement, le serveur SRV 100 détermine la valeur d'un paramètre de qualité associé au message reçu.

Si ce ratio « O(j) / N(j) » est inférieur à un troisième seuil, alors le serveur SRV 100 passe à l'étape 320. Ce cas correspond à une situation où l'on considère que le nombre de messages émis ne respectant pas le *DutyCycle(j)* n'est pas significativement élevé comparativement au nombre de messages « N(j) » émis par le dispositif électronique DISP 150. Aucune action corrective n'est prise.

Au contraire, si le ratio « O(j) / N(j) » est supérieur au troisième seuil, alors le nombre de messages « O(j) » ne respectant pas le *DutyCycle(j)* est significativement élevé comparativement à N(j). Dans ce cas, le dispositif électronique DSIP 150 est considéré comme perturbateur car émettant sur des fréquences porteuses dites non verbales sans respecter le *DutyCycle(j)*). Le serveur SRV 100 passe alors à une étape 350.

Dans une étape 350, le serveur SRV 350 détermine :

- une première sous-liste de la deuxième liste des fréquences porteuses dites « verbales », comprenant au moins une deuxième fréquence porteuse, la deuxième fréquence porteuse n'étant pas comprise dans la première liste de fréquences porteuses allouées au dispositif électronique DISP 150,
- une deuxième sous-liste de la première liste, comprenant au moins une troisième fréquence, la troisième fréquence porteuse n'étant pas comprise dans la deuxième liste,

la première sous-liste et la deuxième sous-liste comprenant un même nombre de fréquences porteuses.

Dit autrement, le serveur SRV 100 détermine deux sous listes comprenant un même nombre d'éléments, avec :

- une première sous-liste de fréquences porteuses dites « verbales » non utilisées par le dispositif électronique DISP 150, et,
- une deuxième sous-liste de fréquences porteuses dites « non verbales » utilisées par le dispositif électronique.

Le serveur SRV 100 envoie ensuite au dispositif électronique DISP 150 un deuxième message comprenant au moins une commande, la commande permettant de remplacer les fréquences porteuses de la deuxième sous-liste par les fréquences porteuses de la première sous-liste. Dit autrement, le serveur envoie une commande au dispositif électronique DISP 150 afin de remplacer des fréquences porteuses dites « non verbales » par des fréquences porteuses dites « verbales ».

Ainsi, le dispositif électronique DISP 150, qui ne respecte pas correctement les paramètres de qualité, dispose d'une première liste de fréquences porteuses comprenant un plus grand pourcentage de fréquence porteuses dites « verbales », fréquences porteuses pour lesquelles l'opérateur du réseau de communication accepte un moindre respect des contrainte qualité. A l'inverse, l'opérateur garantit ainsi que les dispositifs électroniques perturbateurs émettent moins sur les fréquences porteuses dites « non verbales », garantissant un meilleur respect des contraintes qualités sur ces fréquences porteuses.

Le serveur SRV 100 peut remplacer lors de cette étape 350 un pourcentage prédéterminé de fréquences porteuses dites « non verbales » de la sous-bande « j » par des fréquences porteuses dites « verbales ».

Si le serveur SRV 100 ne dispose pas d'assez de fréquences porteuses dites « verbales » pour constituer la première sous-liste, alors le serveur SRV 100 envoie des commandes afin de masquer les fréquences dites non verbales restantes. Dit autrement, si le serveur SRV 100 doit remplacer « n » fréquences porteuses dites « non verbales » de la première liste par les fréquences porteuses « verbales » mais qu'il ne reste plus que « m » (avec « m » < « n ») fréquence porteuse dite « verbale » disponible (i. e. les autres sont déjà toutes comprises dans la première liste), alors le serveur SRV 100 :

- remplace « m » fréquences porteuses de la première liste par les « m » fréquences porteuses dites « verbales »,
- masque les « n - m » fréquences porteuses restantes.

Le remplacement des fréquences porteuses dans la première liste peut se faire au moyen de la commande « *NewChannelReq* » telle que définie dans le document « *LoRaWAN™ Specification v1.0* ». Ainsi, le masquage d'une fréquence porteuse utilisée par un dispositif électronique donné se fait en utilisant une valeur « zéro » pour un champ « *Freq* » de la commande « *NewChannelReq* », avec un champ « *chIndex*» correspondant à ladite fréquence porteuse à masquer.

Lors de l'étape 350, le serveur SRV 100 remet à zéro les compteurs « N(j) » et « O(j) » avant de repasser à l'étape 300.

Le procédé décrit peut être notamment mis en œuvre par un serveur LNS d'un réseau de communication étendu de type *LoRaWAN.*

Selon un mode de réalisation complémentaire de l'invention, le serveur SRV 100 n'effectue pas l'étape 340, passant alors de l'étape 335 à l'étape 345. Le procédé est plus réactif, mais entraîne un envoi d'un nombre de messages de commandes (correspondant aux commandes envoyées lors de l'étape 350) plus nombreux vers les différents dispositifs électroniques.

Selon un mode de réalisation alternatif de l'invention, le serveur SRV 100 passe directement à l'étape 350 après l'étape 330 si la durée « D » est inférieure au premier seuil. Dans ce mode de réalisation, le serveur SRV 100 prend une action corrective (étape 350) dès le premier non-respect d'un paramètre de qualité (*DutyCycle(j)*). Le procédé est alors beaucoup plus réactif, mais peut entraîner un envoi d'un nombre de messages de commandes (correspondant aux commandes envoyées lors de l'étape 350) conséquent vers les différents dispositifs électroniques.

Il est à noter que si plusieurs dispositifs électroniques similaires au dispositif électronique DISP 150 sont connectés au réseau de communication étendu, le serveur exécutera autant d'itération du procédé en parallèle qu'il y a de dispositifs électroniques connectés.

## Revendications

1. Procédé de gestion de l'allocation, par un serveur (100) d'un réseau de communication étendu, d'une première liste de fréquences porteuses pouvant être utilisées par un dispositif électronique (150) connecté audit réseau pour l'émission de messages, le serveur recevant lesdits messages, le procédé étant exécuté par le serveur, le procédé comprenant les étapes de :

   - déterminer une deuxième liste de fréquences porteuses, cette liste correspondant à une liste de fréquences porteuses prédéterminées,
   - recevoir (300, 305) un premier message en provenance du dispositif électronique, le premier message ayant été émis sur une première fréquence porteuse qui n'est pas comprise dans la deuxième liste,
   - déterminer (325, 335, 345) la valeur d'un premier paramètre de qualité associé au premier message reçu,
   - quand la valeur d'un deuxième paramètre de qualité (345), calculé en fonction du premier paramètre de qualité, dépasse la valeur d'un premier seuil :

     ◦ déterminer une première sous-liste de la deuxième liste, comprenant au moins une deuxième fréquence porteuse, la deuxième fréquence porteuse n'étant pas comprise dans la première liste,
     ◦ déterminer une deuxième sous-liste de la première liste, comprenant au moins une troisième fréquence, la troisième fréquence porteuse n'étant pas comprise dans la deuxième liste,

     la première sous-liste et la deuxième sous-liste comprenant un même nombre de fréquences porteuses,
   - envoyer (350) au dispositif électronique un deuxième message comprenant au moins une commande, la commande permettant de remplacer les fréquences porteuses de la deuxième sous-liste par les fréquences porteuses de la première sous-liste.

2. Procédé selon la revendication précédente, déterminer la valeur du deuxième paramètre de qualité associé au premier message reçu comprenant les étapes de :

   - déterminer (325) comme valeur du premier paramètre de qualité une durée écoulée entre la réception du premier message et la réception d'un précédent message,
   - quand la durée écoulée est supérieure à une durée prédéterminée, incrémenter (335) un premier compteur représentant le nombre de dépassement du deuxième seuil,

   le deuxième paramètre de qualité correspondant à un ratio entre la valeur du premier compteur et un deuxième compteur correspondant à un nombre de messages reçus par le serveur en provenance du dispositif électronique via une fréquence porteuse non comprise dans la deuxième liste.

3. Procédé selon la revendication précédente, la durée prédéterminée étant déterminée en fonction d'une durée d'émission du précédent message et d'une valeur prédéterminée associée à la première fréquence porteuse.

4. Procédé selon la revendication précédente, l'étape de déterminer la valeur du deuxième paramètre de qualité n'étant réalisée que si le premier compteur ou le deuxième compteur est supérieur à un deuxième seuil (340).

5. Procédé selon l'une des revendications 2 à 4, le réseau de communication étant de type *LoRaWan*, la première fréquence porteuse étant comprise dans une sous-bande, la durée prédéterminée étant déterminée en fonction d'une valeur d'un paramètre *DutyCycle* associé à la sous-bande, le deuxième compteur correspondant à un nombre de messages reçus par le serveur en provenance du dispositif électronique via une fréquence porteuse :

- non comprise dans la deuxième liste, et,
- comprise dans une même sous-bande que la première fréquence porteuse,

et la troisième fréquence étant de plus comprise dans la sous-bande.

6. Procédé selon l'une des revendications précédentes, la deuxième fréquence porteuse étant choisie égale à une valeur prédéterminée lorsque toutes les fréquences porteuses de la deuxième liste sont comprises dans la première liste.

7. Serveur (100, 200) d'un réseau de communication étendu, le serveur comprenant un premier processeur (201), le premier processeur étant adapté pour :

- allouer une première liste de fréquences porteuses pouvant être utilisées par un dispositif électronique connecté audit réseau pour l'émission de messages,
- déterminer une deuxième liste de fréquences porteuses, cette liste correspondant à une liste de fréquences porteuses prédéterminées,
- recevoir un premier message en provenance du dispositif électronique, le premier message ayant été émis sur une première fréquence porteuse qui n'est pas comprise dans la deuxième liste,
- déterminer la valeur d'un premier paramètre de qualité associé au premier message reçu,
- quand la valeur d'un deuxième paramètre de qualité, calculé en fonction du premier paramètre de qualité, dépasse la valeur d'un premier seuil :

  ◦ déterminer une première sous-liste de la deuxième liste, comprenant au moins une deuxième fréquence porteuse, la deuxième fréquence porteuse n'étant pas comprise dans la première liste,
  ◦ déterminer une deuxième sous-liste de la première liste, comprenant au moins une troisième fréquence, la troisième fréquence n'étant pas comprise dans la deuxième liste,

  la première sous-liste et la deuxième sous-liste comprenant un même nombre de fréquences porteuses,
- envoyer au dispositif électronique un deuxième message comprenant au moins une commande, la commande permettant de remplacer les fréquences porteuses de la deuxième sous-liste par les fréquences porteuses de la première sous-liste.

8. Dispositif électronique (150) adapté pour être connecté à un réseau de communication étendu, le dispositif électronique comprenant un processeur, le processeur étant adapté pour :

- recevoir une première liste de fréquences porteuses pouvant être utilisées pour l'émission de messages sur le réseau de communication,
- émettre des messages sur l'une des fréquences porteuses de la première liste,
- recevoir un deuxième message, le deuxième message comprenant au moins une commande, la commande permettant de remplacer les fréquences porteuses d'une deuxième sous-liste de la première liste par des fréquences porteuses d'une première sous-liste d'une deuxième liste, la deuxième liste correspondant à une liste de fréquences porteuses prédéterminées, la première sous-liste et la deuxième sous-liste comprenant un même nombre de fréquences porteuses et, mettre à jour la première liste en fonction d'au moins la commande reçue.

9. Système comprenant un serveur (100, 200) selon la revendication 7 et au moins un dispositif électronique (150) selon la revendication 8, le serveur et au moins le dispositif électronique étant connecté à un réseau de communication.

10. Programme d'ordinateur, **caractérisé en ce qu'**il comprend des instructions pour mettre en œuvre, par le premier processeur, le procédé de gestion de l'allocation, d'une première liste de fréquences porteuses pouvant être utilisées par un dispositif électronique connecté à un réseau pour l'émission de messages selon l'une quelconque des revendications 1 à 6, lorsque ledit programme d'ordinateur est exécuté par ledit processeur.

11. Moyens de stockage, **caractérisés en ce qu'**ils stockent un programme d'ordinateur selon la revendication précédente.

**Patentansprüche**

1. Verfahren zur Verwaltung der Zuweisung, durch einen Server (100) eines Weitverkehrsnetzes, einer ersten Liste von Trägerfrequenzen, die von einer mit dem Netz verbundenen elektronischen Vorrichtung (150) zum Senden von Nachrichten verwendet werden können, wobei der Server diese Nachrichten empfängt, wobei das Verfahren vom Server ausgeführt wird, wobei das Verfahren die Schritte umfasst:

   - Bestimmen einer zweiten Liste von Trägerfrequenzen, wobei diese Liste einer Liste von vorbestimmten Trägerfrequenzen entspricht,
   - Empfangen (300, 305) einer ersten Nachricht von der elektronischen Vorrichtung, wobei die erste Nachricht auf einer ersten Trägerfrequenz gesendet worden ist, welche nicht in der zweiten Liste enthalten ist,
   - Bestimmen (325, 335, 345) des Wertes eines ersten Qualitätsparameters, welcher der empfangenen ersten Nachricht zugeordnet ist,
   - wenn der Wert eines zweiten Qualitätsparameters (345), der in Abhängigkeit vom ersten Qualitätsparameter berechnet wurde, einen ersten Schwellenwert überschreitet:

      ◦ Bestimmen einer ersten Teilliste der zweiten Liste, die wenigstens eine zweite Trägerfrequenz umfasst, wobei die zweite Trägerfrequenz nicht in der ersten Liste enthalten ist,
      ◦ Bestimmen einer zweiten Teilliste der ersten Liste, die wenigstens eine dritte Frequenz umfasst, wobei die dritte Trägerfrequenz nicht in der zweiten Liste enthalten ist,
      wobei die erste Teilliste und die zweite Teilliste dieselbe Anzahl von Trägerfrequenzen umfassen,

   - Senden (350), an die elektronische Vorrichtung, einer zweiten Nachricht, die wenigstens einen Befehl umfasst, wobei der Befehl ermöglicht, die Trägerfrequenzen der zweiten Teilliste durch die Trägerfrequenzen der ersten Teilliste zu ersetzen.

2. Verfahren nach dem vorhergehenden Anspruch, wobei das Bestimmen des Wertes des zweiten Qualitätsparameters, welcher der empfangenen ersten Nachricht zugeordnet ist, die Schritte umfasst:

   - Bestimmen (325), als Wert des ersten Qualitätsparameters, einer Dauer, die zwischen dem Empfang der ersten Nachricht und dem Empfang einer vorhergehenden Nachricht vergangen ist,
   - wenn die vergangene Dauer größer als eine vorbestimmte Dauer ist, Inkrementieren (335) eines ersten Zählers, der die Anzahl von Überschreitungen des zweiten Schwellenwertes repräsentiert,

   wobei der zweite Qualitätsparameter einem Verhältnis zwischen dem Wert des ersten Zählers und einem zweiten Zähler entspricht, der einer Anzahl von Nachrichten entspricht, die durch den Server von der elektronischen Vorrichtung über eine nicht in der zweiten Liste enthaltene Trägerfrequenz empfangen wurden.

3. Verfahren nach dem vorhergehenden Anspruch, wobei die vorbestimmte Dauer in Abhängigkeit von einer Sendedauer der vorhergehenden Nachricht und von einem vorbestimmten Wett, welcher der ersten Trägerfrequenz zugeordnet ist, bestimmt wird.

4. Verfahren nach dem vorhergehenden Anspruch, wobei der Schritt des Bestimmens des Wertes des zweiten Qualitätsparameters nur ausgeführt wird, falls der erste Zähler oder der zweite Zähler größer als ein zweiter Schwellenwert ist (340).

5. Verfahren nach einem der Ansprüche 2 bis 4, wobei das Kommunikationsnetz vom Typ LoRaWan ist, wobei die erste Trägerfrequenz in einem Teilband enthalten ist, wobei die vorbestimmte Dauer in Abhängigkeit von einem Wert eines dem Teilband zugeordneten Parameters DutyCycle bestimmt wird, wobei der zweite Zähler einer Anzahl von Nachrichten entspricht, die durch den Server von der elektronischen Vorrichtung über eine Trägerfrequenz empfangen werden:

   - die nicht in der zweiten Liste enthalten ist, und
   - die in demselben Teilband wie die erste Trägerfrequenz enthalten ist, und wobei außerdem die dritte Frequenz in dem Teilband enthalten ist.

**6.** Verfahren nach einem der vorhergehenden Ansprüche, wobei die zweite Trägerfrequenz gleich einem vorbestimmten Wert gewählt wird, wenn alle Trägerfrequenzen der zweiten Liste in der ersten Liste enthalten sind.

**7.** Server (100, 200) eines Weitverkehrsnetzes, wobei der Server einen ersten Prozessor (201) umfasst, wobei der erste Prozessor ausgelegt ist zum:

- Zuweisen einer ersten Liste von Trägerfrequenzen, die von einer mit dem Netz verbundenen elektronischen Vorrichtung zum Senden von Nachrichten verwendet werden können,
- Bestimmen einer zweiten Liste von Trägerfrequenzen, wobei diese Liste einer Liste von vorbestimmten Trägerfrequenzen entspricht,
- Empfangen einer ersten Nachricht von der elektronischen Vorrichtung, wobei die erste Nachricht auf einer ersten Trägerfrequenz gesendet worden ist, welche nicht in der zweiten Liste enthalten ist,
- Bestimmen des Wertes eines ersten Qualitätsparameters, welcher der empfangenen ersten Nachricht zugeordnet ist,
- wenn der Wert eines zweiten Qualitätsparameters, der in Abhängigkeit vom ersten Qualitätsparameter berechnet wurde, einen ersten Schwellenwert überschreitet:

  ∘ Bestimmen einer ersten Teilliste der zweiten Liste, die wenigstens eine zweite Trägerfrequenz umfasst, wobei die zweite Trägerfrequenz nicht in der ersten Liste enthalten ist,
  ∘ Bestimmen einer zweiten Teilliste der ersten Liste, die wenigstens eine dritte Frequenz umfasst, wobei die dritte Frequenz nicht in der zweiten Liste enthalten ist,
  wobei die erste Teilliste und die zweite Teilliste dieselbe Anzahl von Trägerfrequenzen umfassen,

- Senden, an die elektronische Vorrichtung, einer zweiten Nachricht, die wenigstens einen Befehl umfasst, wobei der Befehl ermöglicht, die Trägerfrequenzen der zweiten Teilliste durch die Trägerfrequenzen der ersten Teilliste zu ersetzen.

**8.** Elektronische Vorrichtung (150), welche dafür ausgelegt ist, mit einem Weitverkehrsnetz verbunden zu werden, wobei die elektronische Vorrichtung einen Prozessor umfasst, wobei der Prozessor ausgelegt ist zum:

- Empfangen einer ersten Liste von Trägerfrequenzen, die zum Senden von Nachrichten in dem Kommunikationsnetz verwendet werden können,
- Senden von Nachrichten auf einer der Trägerfrequenzen der ersten Liste,
- Empfangen einer zweiten Nachricht, wobei die zweite Nachricht wenigstens einen Befehl umfasst, wobei der Befehl ermöglicht, die Trägerfrequenzen einer zweiten Teilliste der ersten Liste durch Trägerfrequenzen einer ersten Teilliste einer zweiten Liste zu ersetzen, wobei die zweite Liste einer Liste von vorbestimmten Trägerfrequenzen entspricht, wobei die erste Teilliste und die zweite Teilliste dieselbe Anzahl von Trägerfrequenzen umfassen, und

Aktualisieren der ersten Liste in Abhängigkeit von wenigstens dem empfangenen Befehl.

**9.** System, welches einen Server (100, 200) nach Anspruch 7 und wenigstens eine elektronische Vorrichtung (150) nach Anspruch 8 umfasst, wobei der Server und wenigstens die elektronische Vorrichtung mit einem Kommunikationsnetz verbunden sind.

**10.** Computerprogramm, **dadurch gekennzeichnet, dass** es Anweisungen zur Durchführung, durch den ersten Prozessor, des Verfahrens zur Verwaltung der Zuweisung einer ersten Liste von Trägerfrequenzen, die von einer mit einem Netz verbundenen elektronischen Vorrichtung zum Senden von Nachrichten verwendet werden können, nach einem der Ansprüche 1 bis 6, wenn das Computerprogramm von dem Prozessor ausgeführt wird, umfasst.

**11.** Speichermittel, **dadurch gekennzeichnet, dass** sie ein Computerprogramm nach dem vorhergehenden Anspruch speichern.

**Claims**

**1.** Method for managing the allocation, by a server (100) of a wide area communication network, of a first list of carrier frequencies that can be used by an electronic device (150) connected to said network for sending messages, the server receiving said messages, the method being executed by the server, the method comprising the steps of:

- determining a second list of carrier frequencies, this list corresponding to a list of predetermined frequencies,
- receiving (300, 305) a first message coming from the electronic device, the first message having been sent on a first carrier frequency that is not included in the second list,
- determining (325, 335, 345) the value of a quality parameter associated with the first message received,
- when the value of a second quality parameter (345), calculated according to the first quality parameter, exceeds the value of a first threshold:

  ∘ determining a first sub-list of the second list, comprising at least one second carrier frequency, the second carrier frequency not being included in the first list,
  ∘ determining a second sub-list of the first list, comprising at least one third frequency, the third carrier frequency not being included in the second list,

  the first sub-list and the second sub-list comprising the same number of carrier frequencies,
- sending (350) to the electronic device a second message comprising at least one command, the command making it possible to replace the carrier frequencies of the second sub-list with the carrier frequencies of the first sub-list.

2. Method according to the preceding claim, determining the value of a second quality parameter associated with the first message received, comprising the steps of:

- determining (325) as the value of the first quality parameter a time elapsed between the reception of the first message and the reception of a preceding message,
- when the time elapsed is greater than a predetermined time, incrementing (335) a first counter representing the number of exceedings of the second threshold,
- the second quality parameter corresponding to a ratio between the value of the first counter and a second counter corresponding to a number of messages received by the server coming from the electronic device via a carrier frequency not included in the second list.

3. Method according to the preceding claim, the predetermined time being determined according to the time taken to send the previous message and a predetermined value associated with the first carrier frequency.

4. Method according to the preceding claim, the step of determining the value of the quality parameter being performed only if the first counter or the second counter is above a second threshold (340).

5. Method according to any of claims 2 to 4, the communication network being of the *LoRaWan* type, the first carrier frequency being included in a sub-band, the predetermined period being determined according to a value of a *DutyCycle* parameter associated with the sub-band, the second counter corresponding to a number of messages received by the server coming from the electronic device via a carrier frequency:

- not included in the second list and
- included in the same sub-band as the first carrier frequency,

and the third frequency also being included in the sub-band.

6. Method according to any of the preceding claims, the second carrier frequency being chosen equal to a predetermined value when all the carrier frequencies in the second list are included in the first list.

7. Server (100. 200) of a wide area communication network, the server comprising a first processor (201), the first processor being suitable for:

- allocating a first list of carrier frequencies that can be used by an electronic device connected to said network for sending messages,
- determining a second list of carrier frequencies, this list corresponding to a list of predetermined carrier frequencies,
- receiving a first message coming from the electronic device, the first message having been sent on a first carrier frequency that is not included in the second list,

- determining the value of a first quality parameter associated with the first message received,
- when the value of a second quality parameter, calculated according to the first quality parameter, exceeds the value of a first threshold:

  ∘ determining a first sub-list of the second list, comprising at least one second carrier frequency, the second carrier frequency not being included in the first list,
  ∘ determining a second sub-list of the first list, comprising at least one third frequency, the third frequency not being included in the second list,

  the first sub-list and the second sub-list comprising the same number of carrier frequencies,
- sending to the electronic device a second message comprising at least one command, the command making it possible to replace the carrier frequencies of the second sub-list with the carrier frequencies of the first sub-list.

8. Electronic device (150) suitable for being connected to a wide area communication network, the electronic device comprising a processor, the processor being suitable for:

   - receiving a first list of carrier frequencies that can be used for sending messages on the communication network,
   - sending messages on one of the carrier frequencies of the first list,
   - receiving a second message, the second message comprising at least one command, the command making it possible to replace the carrier frequencies of a second sub-list with the carrier frequencies of a first sub-list, and

   updating the first list according to at least the command received.

9. System comprising a server (100, 200) according to claim 7 and at least one electronic device (150) according to claim 8, the server and at least the electronic device being connected to a communication network.

10. Computer program, **characterised in that** it comprises instructions for the implementation, by the first processor, of the method for managing the allocation of a first list of carrier frequencies that can be used by an electronic device connected to a network for sending messages according to any of claims 1 to 6, when said computer program is executed by said processor.

11. Storage means, **characterised in that** they store a computer program according to the preceding claim.

**Fig. 1**

200

CPU
201

RAM
202

ROM
203

205

STCK
204

NET
205

**Fig. 2**

300

MESS.

305 — Verbal e? — oui

non

310 — SS BD(j)

320

$T_{off}(j)$ ← non — (j) ? — 315

oui

D — 325

non — D < $T_{off}$ — 330

oui

O(j) +1 — 335

non — N(j) min ? — 340

oui

350

non — Ratio > Seuil2 — oui → MAJ LISTE

345

**Fig. 3**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2013023214 A1, WANG DONG

**Littérature non-brevet citée dans la description**

- *LoRaWAN™ Specification v1.0,* Janvier 2015